# EUROPEAN PATENT APPLICATION

(11) **EP 2 009 565 A1**
(43) Date of publication of application: **31.12.2008**
(21) Application number: 07301177.7
(22) Date of filing: 28.06.2007
(51) Int. Cl.: G06F 21/00

(54) **Method for securely loading a client applet in an electronic portable device**

(71) Applicant: GEMPLUS, 13420 Gémenos (FR)
(72) Inventor: Girard, Pierre, 13112 La Destrousse (FR); Boursier, Carine, 13400 Aubagne (FR)

(57) **Abstract**

The invention concerns a method for securely loading a client applet (Client.cap) in an electronic portable device (10) where a server package (Server.cap) is already installed.

The method consists in comparing in the electronic portable device (10) a signature (h') of the server package (Server.cap) that the client applet (Client.cap) intends to use with the signature (h) of the server package (Server.cap) already installed in the electronic portable device (10). The loading is validated if the signatures (h, h') are identical and is canceled if the signatures (h, h') are not identical.

## Description

The present invention concerns a method for securely loading a client applet in an electronic portable device. More precisely, the invention is about security verification during the loading process of Java-based applications (applets) on a Java Card.

Java Card refers to a technology that allows applets to be run securely on smart cards and similar small memory footprint devices. Java Card is the tiniest of Java targeted for embedded devices. Java Card gives the user ability to program the device and make them application specific. It is widely used in SIM cards (used in GSM mobile phones) and ATM cards.

Java Card technology enables developers to build, test, and deploy applications and services rapidly and securely. This accelerated process reduces development costs, increases product differentiation, and enhances value to customers.

Almost any type of smart card can benefit from Java Card technology: Subscriber Identity Module (SIM) cards, used in cell phones on most wireless networks, financial cards supporting both online and offline transactions, government and health-care identity cards, cards that provide logical access and physical access to enterprise resources or smart tickets for mass transit.

On the majority of cellular telephone networks, a subscriber uses a smart card commonly called a SIM card to activate the telephone. The card authenticates the user and provides encryption keys for digital voice transmission. When fitted with Java Card technology, SIM cards can also provide transactional services such as remote banking and ticketing.

In the banking industry, smart cards give users secure access to a wide array of networked financial services including cash machines, bill paying, and bridge tolls. Java Card technology enables a single smart card to host multiple financial applications, and to deliver third-party services such as mileage programs or secure online trading.

Other applications are available in a wide variety, wherever security and authenticated identity are important, such as in controlling access to secure facilities and to medical records.

Smart card vendors and issuers benefit from several features of Java Card technology, which is:
- Interoperable: Applets developed with Java Card technology will run on any Java Card technology-enabled smart card, independently of the card vendor and underlying hardware.
- Secure: Java Card technology relies on the inherent security of the Java programming language to provide a secure execution environment. Designed through an open process, the platform's proven industry deployments and security evaluations ensure that card issuers benefit from the most capable and secure technology available today.
- Multi-Application-Capable: Java Card technology enables multiple applications to co-exist securely on a single smart card.
- Dynamic: New applications can be installed securely after a card has been issued, enabling card issuers to respond to their customer's changing needs dynamically.
- Compatible with Existing Standards: The Java Card API is compatible with international standards for smart cards such as ISO7816, or EMV. Major industry-specific standards such as Global Platform and ETSI refer to it.

When creating a Java Card application, the typical steps are the following:
1. *Write* the Java source.
2. *Compile* your source.
3. *Convert* the class files into a Converted Applet (CAP) file.
4. *Verify* that the CAP is valid; this step is optional.
5. *Install* the CAP file.

The first two steps are the same as when developing traditional programs in the Java programming language: write java files and compile them into .class files. Once the Java Card class files are created, though, the process changes.

Before the Java Card classes can be loaded into a Java Card device, they must be converted to the standard CAP file format, and then optionally verified:

Conversion entails transforming each Java package into a CAP file, which contains the combined binary representation of classes and interfaces in a package. Conversion is an off-card operation.

Verification is an optional but important process to validate the CAP file for structure, valid bytecode subset, and inter-package dependencies. This permits to do verification on third-party vendor packages that a final user will use, or if the converter tool comes from a third-party vendor. Verification is typically an off-card operation, but some card products may include an on-board verifier.

Once verified, the CAP file is ready to be installed on the Java Card device.

The Java Card virtual machine is responsible for interpreting the Java Card applet bytecodes which is a subset of standard Java (Java 2 - Standard Edition) bytecodes, and thus requires less space in the smartcards than on regular computing device. Java Card applets are smaller in size which enables them to be loaded in resource constrained devices like smartcards

The Java Card virtual machine features a "split architecture". It means that unlike the regular Java virtual machine, it is split into two parts: the off-card one contains the bytecode verifier and a converter, the on-card one the interpreter and the runtime environment.

It is well known that the bytecode verification step is a mandatory one in order to guaranty the card security and reject rogue applets also known as aggressive or ill-formed applets. Knowing that, a strong loading process must ensure that the verification cannot be bypassed. This is classically achieved by cryptographic mechanisms like verifying and signing/MACing applets in an atomic process and verifying signatures/MACs on the card. However, this process suffers from a residual vulnerability: even a verified applet can conduct an attack if it has been verified with respect to an environment that is different than the one that is actually embedded in the targeted card. This is for example especially true for a client applet: this applet is verified with the export file of the server offering the services. If this export file does not reflect the actual service present on the card, some attack can be conducted. This is especially true if the methods signatures differ.

In order to ensure that such an attack does not occur, it is possible to provide an on-card bytecode verifier in each card, but this solution has not been widely adopted due to following drawbacks:
- it adds a significant code and data in each card;
- the verification process is long;
- the number of available on-card verifiers is very limited, making difficult for a customer to multisource this technology.

Another solution is to maintain a database of the exact content of each card but this process is error prone and works only if the loading process is centralized and not delegated.

One object of the present invention is to remedy these drawbacks.

More precisely, one object of the invention is to guarantee that export files used to verify an applet match with environment present on each card.

Another objective is to guarantee that a loaded applet cannot be aggressive, at reasonable computing time and memory space on card.

These objectives and others that will appear in the following are reached thanks to a method for securely loading a client applet in an electronic portable device, a server package being installed in this electronic portable device, the method consisting in comparing in the electronic portable device a signature of the server package that the client applet intends to use with the signature of the server package already installed in the electronic portable device, this loading being validated if the signatures are identical and being canceled if the signatures are not identical.

In a first implementation, the server package is a server applet.

In a second implementation, the server package is a library.

Preferably, the compared signatures are the hashes of the export file of the server package.

Advantageously, these signatures are generated off-board.

Preferably, the signatures are loaded in the electronic portable device along with the identifiers of the server and client applets.

The signatures can be signed by a loading key.

Advantageously, the presence of the identifier of the server package along with its signature is checked during or after the loading of the server package in the electronic portable device, the method consisting in validating the loading of the server package if the presence of its identifier is confirmed and in cancelling its loading in the contrary case.

Preferably, the presence of the identifier of the server package along with its signature is checked during or after the loading of the client applet in the electronic portable device, the method consisting in validating the loading of the client applet if the presence of the identifier of the server package is confirmed and in cancelling the loading in the contrary case.

The method according to the invention is preferably implemented in a smart card.

Other features and advantages of the invention will emerge from a reading of the following description of one preferred embodiment given by way of non-limiting illustrative example and from the accompanying drawings showing:
- Figure 1, an electronic portable device in which a method according to the invention is implemented;
- Figure 2, the steps of a preferred implementation of the method according to the invention.

In the following, a package that exports some services is called a server package and an applet that imports services is called a client applet. A server package can for example be a server applet as known in the Java Card technology or a library consisting of sets of instructions (services) loaded on the card and that can be instanciated by client applets. Such services are for example the management of I/O, specific read or write instructions, and so on.

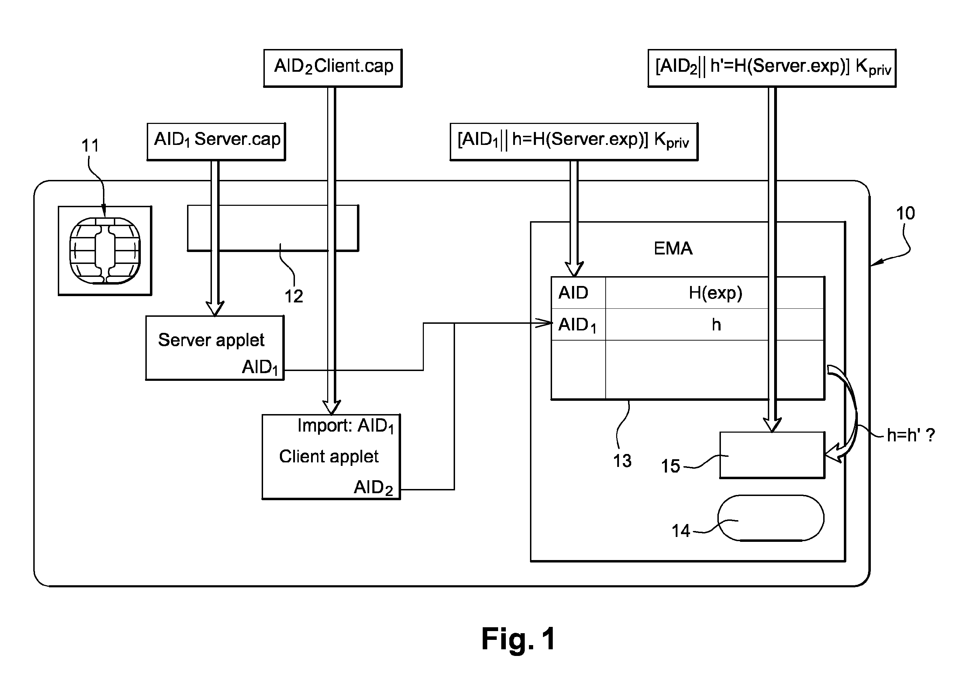

Figure 1 represents an electronic portable device 10 in which a method according to the invention is implemented.

The electronic portable device 10 is for example a Java smart card comprising a chip 11 represented by a module. An applet loader 12 is foreseen on board for treating conversed and compiled Java code source, usually called ".cap".

When a server package Server.cap needs to be loaded onto the card 10, an applet specific to the invention, noted Export Manager Applet (EMA applet), receives a given signature of the server package. This given signature is for example the hash h of its export file H(Server.exp) along with the applet identifier AID₁ of the server package Server.cap. The export file Server.exp can be generated off-card and also hashed off-card.

The applet identifier AID₁ has the purpose to identify the server package. This signature is noted AID₁ ∥ h = H(Server.exp) the character ∥ representing a concatenation. The applet identifier AID₁ and the corresponding hash h are stored in a table 13 of the EMA applet.

A private loading key Kₚᵣᵢᵥ can be used to ensure the integrity of these data. This signature is performed by the entity responsible for the card (e.g. the card issuer) and verified in the EMA applet thanks to the corresponding certificate 14 present onboard.

Once the EMA has stored AID₁ and h in table 13, the server package Server.cap can be loaded onto the card by the applet loader 12. After loading, or even during loading, the presence of AID₁ is verified in the table 13, in order to ensure that the previous step has been performed. If AID₁ is detected in the table 13, the loading of the server package Server.cap can go on next step. In the contrary case, server package Server.cap is cancelled.

The card 10 is now ready for receiving a client applet Client.cap (that uses the services of the server package with AID1), but before loading Client.cap, the signature (hash) of the server export file that the client applet intends to use is loaded in the card for future comparison with the already loaded server export package. This server package that the client applet intends to use has to be the same than the on card already stored server package, in order to ensure that the server and client applets are of a safe origin or at least that the server applet version is the right one.

One way to operate is to load the client's AID, noted AID₂ in the figure, along with the hash (noted h') of the export file of the server package (applet) used to verify the client applet.

This information is noted AID₂ ∥ h', with h' being equal to H (Server.exp). The private loading key Kₚᵣᵢᵥ can here also be used for the same purpose that mentioned above.

AID₂ ∥ h' is temporarily stored in a memory 15 of the EMA applet.

Then, the client applet Client.cap can be loaded in the card. The loader 12 then retrieves in the import component of the client applet the AID₁ of the server applet and transmits it to EMA applet. The EMA applet first verifies that AID₁ is present in the table of the EMA applet. If yes, the stored hash h corresponding to AID₁ is compared with the received hash h' in the temporary memory 15. If h = h', one can be sure that the server applet Server.cap that will be used by the client applet Client.cap is the right one (the one that was designed to be used by Client.cap and not a wrong version thereof).

If the comparison is successful, the process ends. Otherwise, Server.cap loaded on the card does not correspond to the one the client applet was intended to use. Client.cap is retrieved from the card (the loading of Client.cap is cancelled).

The comparison between h and h' can be done during the loading of Client.cap or after its loading. If h = h' is detected during the loading of Client.cap, the loading is not interrupted and executed up to its end. If the equality is detected at the end of the loading, the loading is considered as being successful and terminated.

The function H is preferably a SHA or MD5 function.

Alternatively, instead of using the hashes h and h' of the export file of the server package (applet), it is possible to use the entire export file of this server package or a MAC or a signature with a private key...

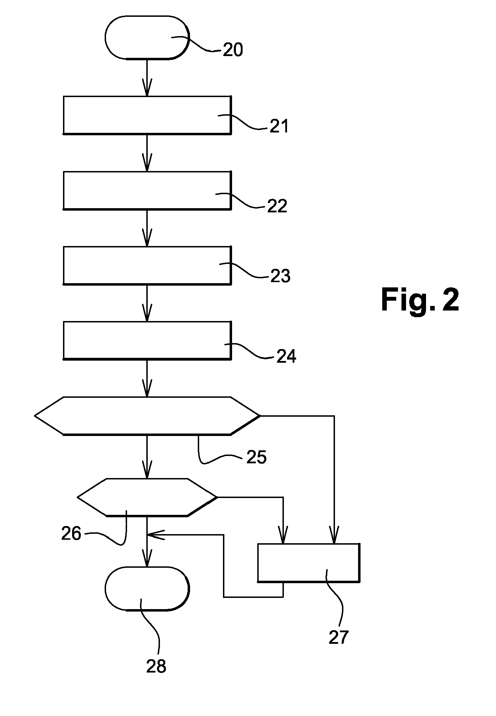

Figure 2 represents the steps of a preferred implementation of the method according to the invention.

Step 20 is a start step. At step 21, the hash h of the export file of the server package is loaded in the card along with the identifier of the server applet.

At step 22, once the EMA has stored AID₁ and h in table 13 of figure 1, the server package Server.cap is be loaded onto the card. The presence of AID₁ is preferably verified in the table 13.

At step 23, AID₂ along with the hash h' of the export file of the server package intended to be used by the client applet is loaded in the card (in the temporary memory 15 of figure 1).

At step 24, the client applet Client.cap is loaded in the card and, at step 25 (or during step 24), the EMA applet first verifies that AID₁ is present in the table 13. If yes, the stored hash h corresponding to AID₁ is compared (during step 26) with the received hash h' in the temporary memory 15. If h = h', the process ends (step 28).

At step 25, if AID₁ is not present in the table of the card, the loaded client applet is retrieved from the card (step 27). This also occurs if h is different from h'.

The invention permits to guarantee that a loaded applet cannot be aggressive, at reasonable computing time and memory space on card and without heavy database maintenance.

The electronic portable device is not necessarily a smart card and can also be a dongle, e.g. a USB dongle connectable to a personal computer.

## Claims

1. A method for securely loading a client applet (Client.cap) in an electronic portable device (10), a server package (Server.cap) being installed in said electronic portable device (10), said method consisting in comparing in said electronic portable device (10) a signature (h') of the server package (Server.cap) that said client applet (Client.cap) intends to use with the signature (h) of the server package (Server.cap) already installed in said electronic portable device (10), said loading being validated if said signatures (h, h') are identical and being canceled if said signatures (h, h') are not identical.

2. A method according to claim 1, wherein said server package is a server applet.

3. A method according to claim 1, wherein said server package is a library.

4. A method according to any of the claims 1 to 3, wherein said signatures (h, h') are the hashes of the export file (Server.exp) of said server package (Server.cap).

5. A method according to any of the claims 1 to 4, wherein said signatures (h, h') are generated off-board.

6. A method according to any of the claims 1 to 5, wherein said signatures (h, h') are loaded in said electronic portable device (10) along with the identifiers (AID₁, AID₂) of said server and client applets (Server.cap, Client.cap).

7. A method according to any of the claims 1 to 6, wherein said signatures (h, h') are signed by a loading key (Kₚᵣᵢᵥ).

8. A method according to any of the claims 6 and 7, wherein the presence of the identifier (AID₁) of said server package (Server.cap) along with the signature (h) of said server package (Server.cap) is checked during or after the loading of said server package (Server.cap) in said electronic portable device (10), said method consisting in validating the loading of said server package (Server.cap) if said presence is confirmed and in cancelling said loading in the contrary case.

9. A method according to any of the claims 4 to 6, wherein the presence of the identifier (AID₁) of said server package (Server.cap) along with the signature (h) of said server package (Server.cap) is checked during or after the loading of said client applet (Client.cap) in said electronic portable device (10), said method consisting in validating the loading of said client applet (Client.cap) if said presence is confirmed and in cancelling said loading in the contrary case.

10. A method according to any of the claims 1 to 9, wherein said electronic portable device is a smart card (10).
